# EUROPEAN PATENT APPLICATION

(11) **EP 1 970 138 A1**
(43) Date of publication of application: **17.09.2008**
(21) Application number: 07005439.0
(22) Date of filing: 16.03.2007
(51) Int. Cl.: B21D 39/04, B21D 39/08, F16L 37/252

(54) **A tool (hand-press) used for the formation of protuberances on copper tubing sections**

(71) Applicant: Chalkides, Nikolaos, 41335 Larissa (GR)
(72) Inventor: Chalkides, Nikolaos, 41335 Larissa (GR)

(57) **Abstract**

Coupling of copper pipe sections can be obtained by forming two diametrically opposite hemispherical protuberances (c), at the external surface of each copper pipe section.
Each copper pipe section carries two diametrically opposite protuberances (c) at its external surface on each end, formed by the technician by means of a special hand- press (3). The hand-press (3) uses a lever (M) which is turned in a clockwise/anticlockwise direction in order to generate the pressure required to form the protuberances (c) on the outer surface of the pipe (2). This action makes a shaft (K) rotate in the same direction. The rotational movement of the shaft (K) is conveyed to a component (N) of elliptical cross-section and thus transformed into pressure exerted on two diametrically opposite pistons (Z) which move radially outwards and exert the generated pressure on the inner surface of the pipe (2), thereby deforming slightly the wall of the pipe (2), and creating two diametrically opposite hemispherical protuberances (c) seen on the outside wall of the pipe (2).
In another version of the hand-press, the component is now conical and is pushed in between the two pistons, which are then pushed radially outwards forming the two protuberances. The component is pushed by the shaft which now moves in/out along its axis and the pressure required is generated by a handle pivoted in the middle and used in a way that pretty much resembles the movement of a "corkscrew".

## Description

This is the description of a special tool (hand-press) required for the formation of protuberances on copper tubing sections, which are then coupled by means of copper components. This hand-press is used to deform copper tubing sections, a task performed by the technician *in situ,* so as to form the hemispherical protuberances which are necessary for the bayonet-type connectors used in the aforementioned method.

The advantages of this hand-press are as follows :
A) Easily-used, hand-operated tool used by the technician *in situ.*
B) Protuberance formation does not deform the ends of copper tubing sections, so that if the piping configuration is changed later on, the same components and tubing sections, cut to a new length if required, can be used again and again, thus minimizing waste of material.
C) There is no need for a large, high-cost and cumbersome press (or special footprint wrench). A simple, low-cost and versatile hand tool constituting an improvement to the aforementioned coupling method **(03745846.0 - 2424** / **1495253)** which has already been filed and patented, is used instead.

A brief description of how the coupling of the copper tubing sections works will follow. A complete description of the coupling procedure is given in method **(03745846.0 - 2424 / 1495253)** which has already been filed and patented. **Figures 1-7** are given as reference to this method, whereas **Figures 8** and **9** refer to the design of the hand-press :

Firstly, all the components (elbows, connectors, etc.) shall be manufactured of moulded copper and shall be provided to the technician with an already-fitted sealing rubber O-ring which rests in a ring grove specially made for this purpose. This rubber ring is responsible for providing the necessary air-tight sealing between pipes and components. If the aforementioned coupling method is to be applied, the components shall also carry a second ring grove running along the inner circumference of the component with two semi-cylindrical grove sections (for insertion and/or extraction of the pipe from the component) perpendicular to the second ring grove and reaching as far as the edge of the coupling end of the component. These semi-cylindrical groves shall be formed at diametrically-opposite places, i.e. at the ends of a diameter of the pipe's coupling end's opening. Two hemispherical protuberances on the pipe shall be aligned with the said semi-cylindrical grove sections and guided into the component's second inner ring grove. The protuberances may even have the form of a dash, if a higher degree of tightness is desired and are made by the technician on the copper pipe. A special tool (hand-press) shall be used by the technician to form these hemispherical or dash-like protuberances. The pipe shall be inserted into the press and these standard size hemispherical protuberances shall be made at a specified distance from the pipe end. The protuberances shall be formed at such a distance from the end of the pipe that the desired degree of tightness can be achieved when the pipe is inserted into the sealing O-ring located at the component coupling end.

At the same time, by pushing the pipe into the component the said protuberances shall be guided through the perpendicular semi-cylindrical (in/out) grove sections into the second semi-cylindrical ring grove. Once the protuberances reach the second semi-cylindrical ring grove, the pipe cannot be pushed further into the component because this is not allowed by the walls of the second ring grove and the protuberances. Following that, the pipe shall be turned compared to the component less than 180 degrees. In doing so the protuberances shall be located inside the ring grove and move away from the two semi-cylindrical (in/out) grove sections. The result of this will be that the pipe can no longer be extracted from the component since the protuberances will be prevented from moving in/out of the component by the walls of the second ring grove. In order to prevent the pipe from accidentally turning while in place and subsequent alignment of the protuberances with the two perpendicular (in/out) grove sections, a wedge-like pin of suitable length can be used as a locking device. The wedge-like pin shall be inserted into one of the perpendicular (in/out) grove sections as far as the second ring grove thus preventing any accidental alignment of the protuberances with the in/out grove sections.

The hand-press used by the technician shall enable the formation of the protuberances at such distance from the edge of the coupling end of the pipe that, when the protuberances are already located within the first ring grove, the edge of the pipe shall have gone past the second inner grove carrying the sealing O-ring found further down the component.

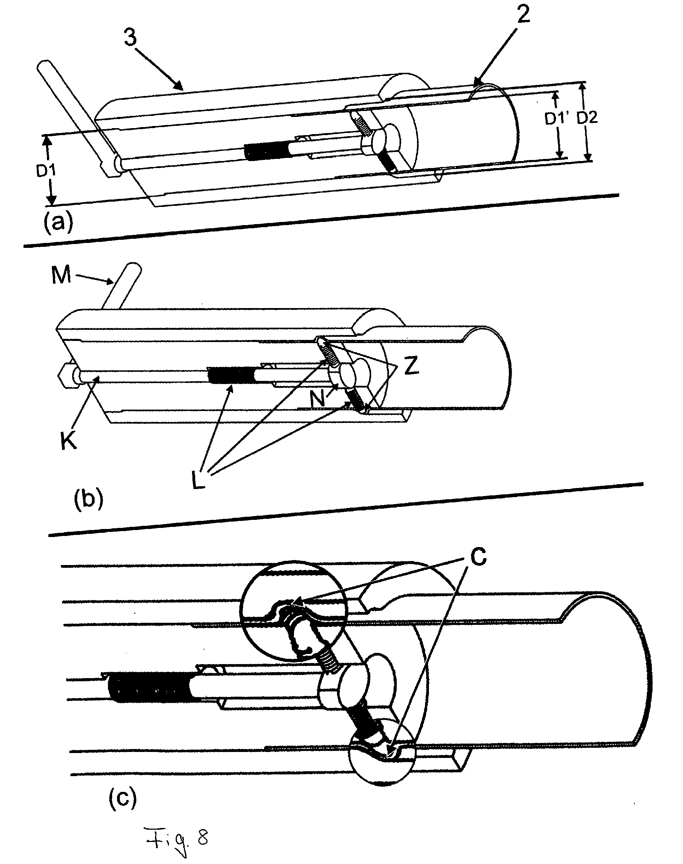

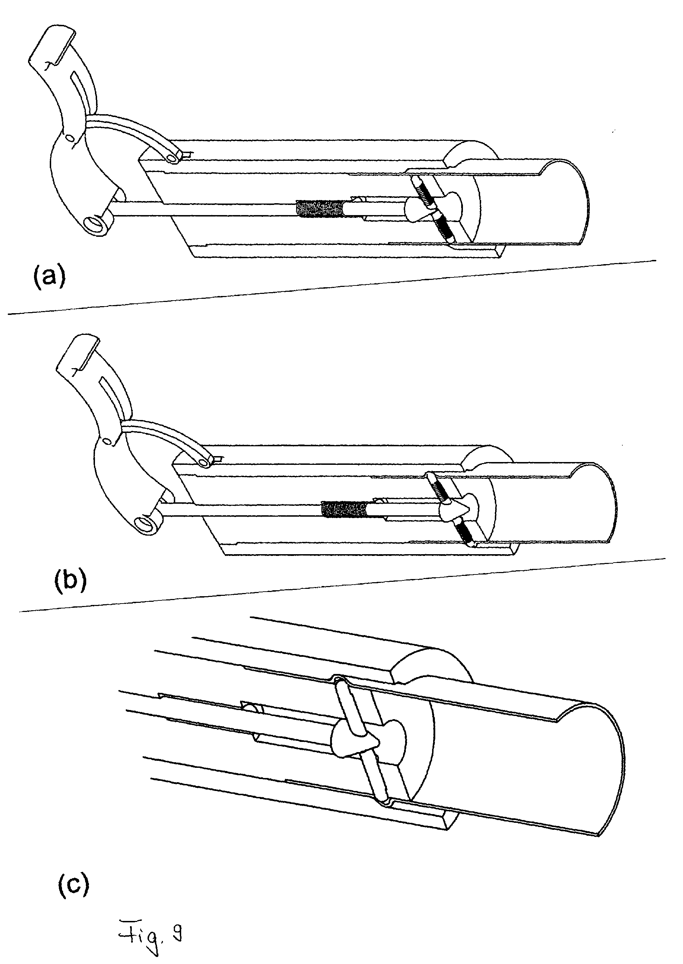

**The procedure for the formation of said protuberances on copper tube sections of suitable length using the hand-press should be performed as follows (hand-press is shown in** **Figures 8** **&** **9****) :**

The tubing section (pipe) of suitable diameter, which has been chosen for coupling to a component, shall be cut to the required length and then inserted into the hand-press, at the same time two diametrically-opposite pistons located inside the press shall enter the tubing section to a suitable position from the end of the pipe, in order to form the two protuberances on the outer pipe surface. Then, the pistons shall be forced radially outwards by means of a lever on the press in order to slightly deform the inner wall of the pipe and form the two diametrically-opposite hemispherical protuberances 'c' seen on the outer surface of the pipe. The press shall have an internal diameter equal to the external diameter of the pipe but only in the area extending from the pistons and towards the inside of the press, whereas in the area extending from the pistons as far as the point of entrance of the pipe the internal diameter of the press shall be larger than the external diameter of the pipe in order to allow enough room for the formation of the protuberances 'c' as well as extraction of the pipe from the press.

The various stages of the method are shown in detail in the schematic diagrams 1 to 7, which are given as reference to the method. In these diagrams the component is depicted as **'1'** and the copper pipe as **'2'.** The rubber O-ring is represented by letter **'e',** whereas the first semi-cylindrical ring grove running along the inner circumference of the component and housing it is shown as **'a'.**

The second ring grove is depicted as **'b'**. The perpendicular semi-cylindrical (in/out) grove sections are depicted as **'b''**. The protuberances formed by the technician are shown as 'c'.

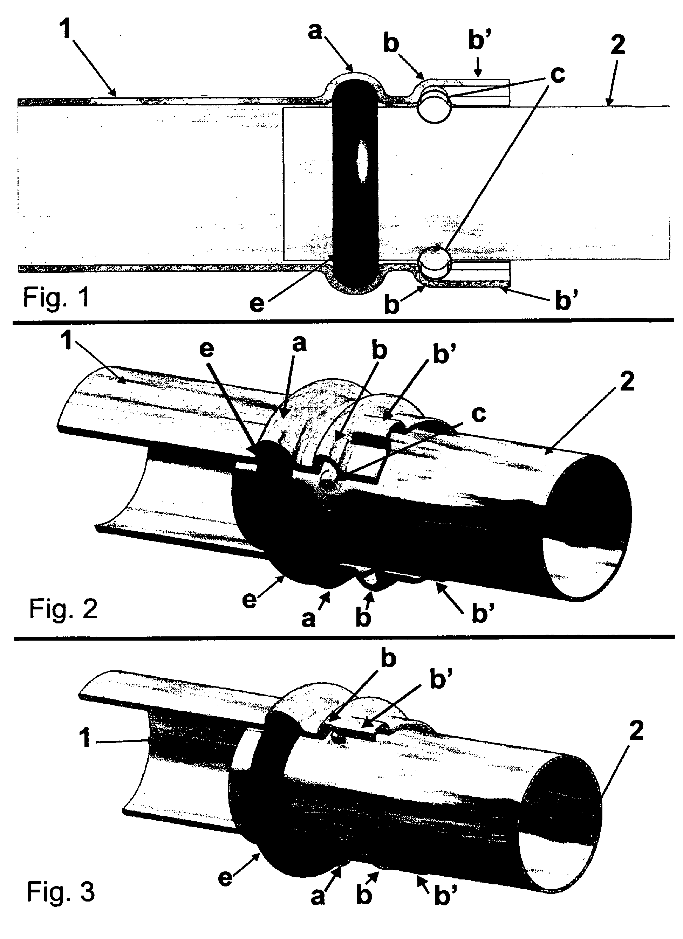

**Figure 1** **:** it shows the cross-section of a component after it has been coupled to a pipe. The ring groves of the component, the hemispherical protuberances of the pipe as well as the sealing rubber O-ring are clearly visible.
**Figure 2** **:** it shows the same layout as figure 1, except that the cross-section of the component is smaller.
**Figure 3** **:** the complete component is clearly visible. The pipe section inside the component after coupling is also visible.

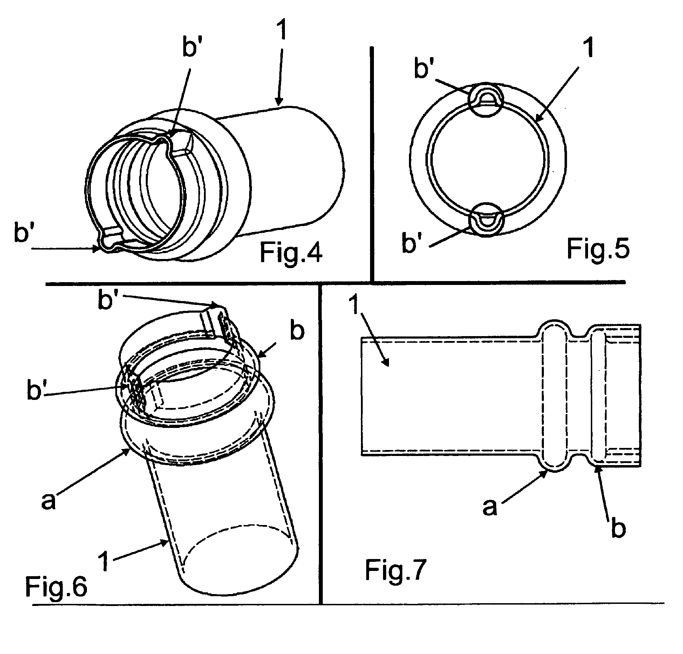

**Figure 4** : it shows a 3-D view of the typical component clearly depicting the perpendicular semi-cylindrical (in/out) grove sections, **'b''**.
**Figure 5** **:** it shows a top view of the typical component.
**Figure 6** **:** it shows a 3-D view of the typical component along with the two ring groves **'a'** and **'b'** as well as the perpendicular semi-cylindrical (in/out) grove sections **'b''**.
**Figure 7** **:** it shows a side view of the typical component along with ring groves **'a'** and **'b'.**
**Figures 8** **(a, b, c)** and **9 (a, b, c)** show the cross-sections of two different versions of the hand-press which can be used by the technician to form protuberances **'c',** on the pipe. In these diagrams, number **'3'** represents the press, the lever of the press to be turned (or the handle to be pressed in the second version, shown in Figure 9) by the technician is symbolized by letter **'M',** shaft **'K'** conveys the pressure to pistons **'Z',** and letter **'L'** represents the springs which are necessary for pushing the moving parts of the press back to their original position once the protuberance formation task has been performed. Letters **'D1'** and **'D2'** symbolize the two different inner diameters whereas letter **'D1"** represents the external diameter of the pipe.

In **Figure 8****,** letter **'N'** represents a cylindrical component made of metal of elliptical cross-section which transforms the rotational movement of shaft **'K',** into piston movement **'Z',** perpendicular to the shaft axis.

In **Figure 9****,** letter **'N"** represents a conical component made of metal which transforms the axial movement of shaft **'K',** into piston movement **'Z',** perpendicular to the shaft axis.

### Comparison to document D1, i.e. GB1260970

**1.** The only feature of the method, common to both methods, is that they both utilize a bayonet type coupling although different in concept.
   The remaining features are different from those described in GB1260970 and are as follows:
   **(a)** The bayonet type coupling of the method utilizes two diametrically opposite hemispherical protuberances **'c'** formed on the outer surface of the pipe using the special hand-press **'3'**.
   **(b)** The formation of the two hemispherical protuberances **'c'** described in 1(a) above1 is performed *in situ* by the technician, and only necessitates the use of hand-press **'3'**.
   **(c)** The formation of the two hemispherical protuberances described in 1(a) and 1(b) above can be performed on any given length of metal pipe section *in situ* and does not necessitate work carried out at the workshop.
   **(d)** The various components (elbows, connectors, etc.) are cast in industrial copper foundry facilities according to the specifications of the inventor depending on the needs for each pipe diameter, and can be used in conjunction **only** with coupling method **03745846.0 - 2424 / 1495253** which has already been filed and patented.

## Claims

1. A hand-press **'3'** used for the formation of two diametrically opposite hemispherical protuberances on copper pipes, to be used as described in coupling method **03745846.0 - 2424** / **1495253** which has already been filed and patented, consisting of the following parts :
**(a)** A lever **'M'** which is turned by hand in a clockwise/anticlockwise direction in order to generate the pressure required to form the two protuberances on the outer surface of the pipe **'c'.** This pressure is transferred to the two diametrically opposite pistons **'Z'** via horizontal shaft **'K'** and component **'N'** or **'N'',**
**(b)** A horizontal shaft **'K',** which is free to rotate in the same clockwise/anticlockwise direction in which lever **'M'** is turned, and is used to convey the pressure generated by lever **'M'** required for the formation of the two protuberances on the outer surface of the pipe **'c',** to component **'N'** or **'N''** (depending on the type of press used, Figure 8 or 9),
**(c)** A component **'N'** as depicted in **Figure 8,** which is used to drive the two pistons **'Z'** radially outwards due to the rotational movement of shaft **'K'**. It is in the shape of a cylindrical piece of solid metal of elliptical cross-section, and transforms the rotational movement of shaft **'K'** into radially outward piston movement **'Z'**, perpendicular to the shaft axis,
**(d) OR** a component **'N''** as depicted in **Figure 9,** which is used to drive the two pistons **'Z'** radially outwards due to the inward movement of shaft **'K'**. A handle is pivoted in the middle and used in a way that pretty much resembles the movement of a "corkscrew". In this case, it is in the shape of a conical piece of solid metal, which is being pushed inward along the symmetrical axis of shaft **'K',** thus, transforming the axial movement of shaft **'K'** into radially outward piston movement **'Z',** perpendicular to the shaft axis. Lever **'M'** is now in the shape of a handle, pivoted in the middle and manually operated. Pressure exerted on the handle at the point where it is connected to shaft **'K'** is used to push shaft **'K'** inside press **'3',** and consequently push the conical component **'N"** in between pistons **'Z'** which are in turn pushed radially outwards,
**(e)**Two diametrically opposite pistons **'Z',** which are driven by component **'N'** or **'N''**, and located inside press **'3'**, entering pipe **'2'** at suitable positions, exactly at the points where the two protuberances are to be formed on the outer surface of the pipe. They extend outwards and perpendicularly to the shaft axis from the inside of the pipe and exert the pressure generated by lever **'M'** on the inner surface of the pipe, thereby deforming slightly the wall of the pipe, thus, creating two diametrically opposite hemispherical protuberances **'c'** seen on the outside wall of the pipe,
**(f)** An inner press diameter **'D1'** equal to the external diameter of the pipe **'D1'** only in the area extending from pistons **'Z'** to the inside of the press, whereas in the area extending from pistons **'Z'** as far as the point of entrance of the pipe the internal diameter of the press **'D2'** is larger than the external diameter of the pipe **'D1'** in order to allow room for the formation of two hemispherical protuberances **'c'** and extraction of the pipe from the press.
